# EUROPÄISCHE PATENTSCHRIFT

(11) **EP 0 431 384 B1**
(45) Veröffentlichungstag und Bekanntmachung des Hinweises auf die Patenterteilung: **03.03.1993**
(21) Anmeldenummer: 90122111.9
(22) Anmeldetag: 20.11.1990
(51) Int. Cl.: C02F 1/20, C02F 1/34, C02F 9/00, B01D 19/00

(54) **Anordnung zum Austreiben leichtflüchtiger Verunreinigungen aus dem Grundwasser**
Apparatus for the expulsion of volatile pollutants from ground water
Dispositif pour chasser les souillures volatiles de la nappe souterraine

(30) Priorität: 07.12.1989 DE 3940433
(43) Veröffentlichungstag der Anmeldung: 12.06.1991
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- DE-A- 2 542 965
- DE-C- 3 805 200

## Beschreibung

Die Erfindung betrifft eine Anordnung zum Austreiben leichtflüchtiger Verunreinigungen aus dem Grundwasser und dem von ihm durchströmten Erdreich durch Erzeugung von Unterdruck in einem bis in den Bereich des verunreinigten Grundwassers getriebenen Brunnenschacht mit mindestens teilweise wasserdurchlässigen Schachtwandungen und durch Zuleitung von Frischluft unterhalb des Grundwasserspiegels in den Brunnenschacht.

Eine Anordnung der eingangs genannten Art, bei der Luft allein unter der Wirkung des im wasserfreien Bereich des Brunnenschachtes gebildeten Unterdruckes in den Brunnenschacht eingeleitet wird, ist bereits vorgeschlagen worden (DE-PS 38 05 200). Mit dieser Anordnung kann beim Austreiben leichtflüchtiger Verunreinigungen aus dem Grundwasser in gasförmigem Zustand ein beachtlich großer Wirkungsgrad erzielt werden.

Der Erfindung liegt die Aufgabe zugrunde, die Reinigungswirkung der eingangs genannten, bereits vorgeschlagenen Anordnung auch bei dichteren, Grundwasser führenden Bodenschichten zu verbessern.

Die gestellte Aufgabe wird mit einer Anordnung der eingangs genannten Art erfindungsgemäß dadurch gelöst, daß in der Umgebung des Brunnenschachtes mindestens ein Schwingungserzeuger angeordnet ist, der mechanische Schwingungen begrenzter Energie abgibt, dergestalt, daß die Schwingungen in den Kapillaren der Bodenschichten molekulare Flüssigkeitsbewegungen auslösen, ohne dabei die Kapillaren zu zerstören.

Verunreinigungen setzen sich vorwiegend in mit Grundwasser ungesättigten Bereichen des Bodens in kleinen Kapillarräumen ab. Diese Verunreinigungen sind sehr schwer zu entfernen, insbesondere wenn die Bodenschicht sehr dicht ist. Mit herkömmlichen Reinigungsanordnungen werden in erster Linie Kontaminationen in porösen, mit Grundwasser gesättigten Bereichen des Bodens erfaßt. Durch die Erzeugung feiner Schwingungen ist es jedoch möglich, molekulare Flüssigkeitsbewegungen in den Kapillaren zu erreichen und dadurch auch Verunreinigungen aus den Kapillaren zu lösen und mit dem Grundwasser in den Schacht zu leiten. Stärkere Schwingungen würden zum Einsturz der Kapillaren führen und dadurch einen Abtransport der Kontaminationsstoffe aus dem Erdreich vereiteln. Zur Einstellung der richtigen Schwingungsenergie sind zweckmäßigerweise Amplitude und Frequenz der Schwingungen einstellbar. Die Schwingungserzeuger können dabei in Bohrungen um den Brunnenschacht angeordnet sein, wodurch sich die Reichweite der Reinigungswirkung der Anordnung erweitern läßt. Es ist jedoch auch möglich, einen oder mehrere Schwingungserzeuger direkt im Brunnenschacht anzubringen, wenn Bohrungen in der Umgebung des Schachtes nicht möglich oder nicht erwünscht sind.

Bei Anordnung der Schwingungserzeuger in separaten Bohrungen werden diese oberhalb des Grundwasserspiegels angeordnet, um direkt auf die mit Grundwasser ungesättigten Bodenschichten einwirken zu können. Dadurch ist auch die Reinigung vergleichsweise dichter Bodenschichten von molekularen Schmutzpartikeln möglich. Die Schwingungen können dabei auch über eine längere, einstellbare Zeitdauer aufrechterhalten werden.

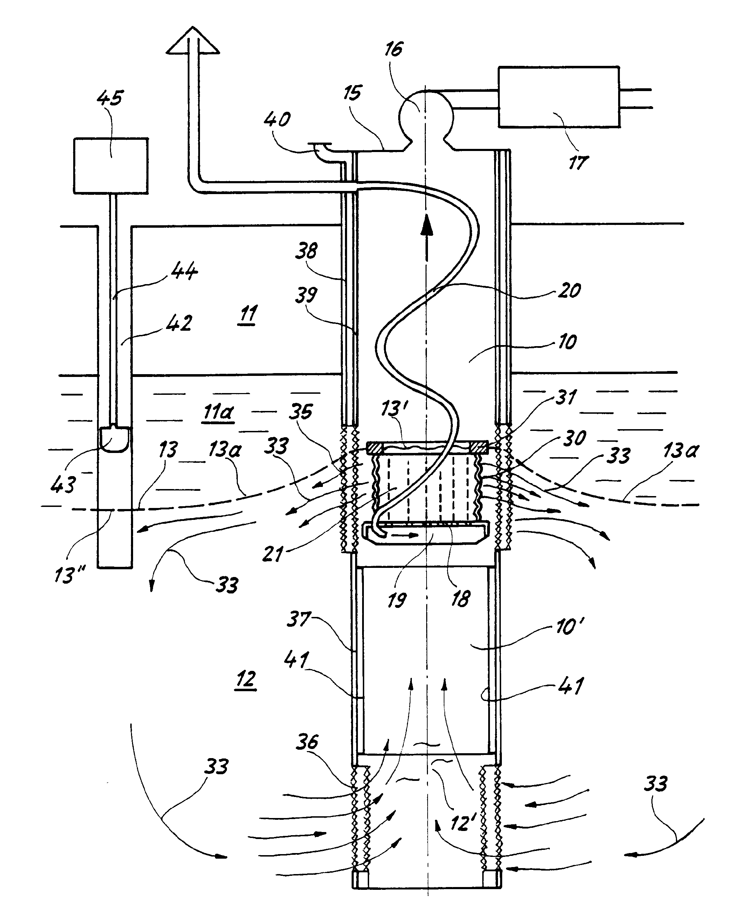

Nachfolgend wird eine Anordnung gemäß der Erfindung anhand der Zeichnung, die einen schematischen Längsschnitt durch eine Anordnung zeigt, näher erläutert.

In der Zeichnung ist ein Brunnenschacht 10 dargestellt, der in das Erdreich 11 durch eine verschmutzte, mit Grundwasser ungesättigte Schicht 11a hindurch bis zu einem Grundwasserbereich 12 getrieben ist. Der Grundwasserspiegel ist durch eine mit der Bezugsziffer 13 gekennzeichnete gestrichelte Linie angedeutet. Der Brunnenschacht 10 ist mit Ausnahme zweier Siebwandungsbereiche 35 und 36 mit wasserundurchlässigen Rohren 37 und 38 armiert. Oberhalb der Erdoberfläche ist der Schacht 10 mit einem Deckel 15 verschlossen, der eine Öffnung für einen Ventilator 16 zur Unterdruckerzeugung im Schacht 10 aufweist. Die vom Ventilator 16 aus dem Brunnenschacht 10 abgesaugte Luft wird über ein Filter 17 ins Freie geleitet. Durch die Unterdruckbildung im Brunnenschacht wird der Grundwasserspiegel 13 in der Umgebung des Schachtes 10 und im Schacht 10 selbst angehoben, was durch die gestrichelte Linie 13a angedeutet ist. Unterhalb des Grundwasserspiegels 13′ im Brunnenschacht 10 ist eine über Ketten 30 an einem Schwimmring 31 befestigte topfförmige Siebplatte 18 angeordnet. Zu ihrem Innenraum 19 wird über eine Luftleitung 20 Frischluft von außen zugeführt, die durch die Lochungen der Siebplatte 18 in kleinen Bläschen durch den Reinigungsbereich 21 aufsteigt, bevor sie anschließend durch den Ventilator 16 wieder aus dem Schacht 10 abgesaugt wird. Beim Aufsteigen durch den Reinigungsbereich 21 kann die Luft leichtflüchtige Verunreinigungen aus dem Grundwasser mitreißen und über das Filter 17 ins Freie leiten.

Um Verunreinigungen auch aus dem mit Grundwasser ungesättigten Bodenbereich 11a besser mit der Reinigungsanordnung im Brunnenschacht erfassen zu können, ist in einigem Abstand zum Brunnenschacht 10 eine Bohrung 42 bis zum Grundwasserbereich 12 in das Erdreich 11 und durch die mit Grundwasser ungesättigte, verunreinigte Bodenschicht 11a hindurch vorgesehen. In der Bohrung 42 ist ein elektrisch angetriebener Schwingungserzeuger 43 oberhalb des mit 13˝ bezeichneten Grundwasserspiegels in der Bohrung 42 angeordnet. Der Schwingungserzeuger 43 ist über ein Kabel 44 mit einer oberhalb der Erdoberfläche angeordneten Anzeige-und Steuereinheit 45 verbunden. Die Steuereinheit 45 ermöglicht eine Regulierung der Amplitude und/oder der Frequenz der erzeugten Schwingungen. Außerdem weist sie eine Zeitschaltuhr auf, mit der die Dauer der Schwingungserzeugung gesteuert werden kann.

Die erzeugten Schwingungen bewirken molekulare Flüssigkeitsbewegungen in den Kapillaren und dabei bereits auch schon ein Lösen von leichtflüchtigen Verunreinigungen, die in den Kapillaren des mit Grundwasser ungesättigten Bodenbereiches 11a sonst hartnäckig gebunden bleiben. Die Schwingungen sind aber so energiearm gehalten, daß sie die Kapillaren nicht zerstören. Frei werdende Verunreinigungen können zum Teil als Gas durch die grundwasserfreie Bodenschicht nach oben gelangen, sonst aber mit der bewegten Flüssigkeit aus den Kapillaren in den mit Grundwasser gesättigten Bereich 12 gelangen, wo sie von der mit den Pfeilen 33 bezeichneten und von der Reinigungsanordnung im Brunnenschacht 10 hervorgerufenen Strömung erfaßt und über den Siebwandungsbereich 36 dem Brunnenschacht 10 zugeleitet werden.

Die Reinigungswirkung der Anordnung kann durch den Einsatz von Mikroorganismen, die mit einer Nährlösung durch einen Einlaß 40 in den Zwischenraum 39 zwischen den beiden Wandungen des Rohres 38 eingeführt werden können, erhöht werden. Von dort aus sinken die Mikroorganismen in den Siebwandungsbereich 35 ab, wo sie vom Grundwasser in das umgebende Erdreich getragen werden. Das Wachstum der Mikroben läßt sich dabei durch Heizelemente 41 im Brunnenschacht 10 beschleunigen.

Abweichend von der dargestellten Ausführungsform der Erfindung können zusätzlich weitere Bohrungen gleicher oder unterschiedlicher Tiefe mit jeweils einem oder mehreren Schwingungserzeugern in der Umgebung des Brunnenschachtes vorgesehen und auch im Brunnenschacht selbst Schwingungserzeuger angeordnet sein. Dadurch kann die Reichweite und die Wirksamkeit der Reinigungsanordnung auch in verunreinigten dichteren Bodenschichten vergrößert werden.

## Patentansprüche

1. Anordnung zum Austreiben leichtflüchtiger Verunreinigungen aus dem Grundwasser und dem von ihm durchströmten Erdreich durch Erzeugung von Unterdruck in einem bis in den Bereich des verunreinigten Grundwassers getriebenen Brunnenschacht mit mindestens teilweise wasserdurchlässigen Schachtwandungen und durch Zuleitung von Frischluft unterhalb des Grundwasserspiegels in den Brunnenschacht, dadurch gekennzeichnet, daß in der Umgebung des Brunnenschachtes (10) in der Boden Schichthöhe mindestens ein Schwingungserzeuger (43) angeordnet ist, der mechanische Schwingungen begrenzter Energie abgibt, dergestalt, daß die Schwingungen in den Kapillaren der Bodenschichten (11a) molekulare Flüssigkeitsbewegungen auslösen, ohne dabei die Kapillaren zu zerstören.

2. Anordnung nach Anspruch 1, dadurch gekennzeichnet, daß die Schwingungserzeuger (43) in einer oder mehreren Bohrungen (42), die in der Umgebung des Brunnenschachtes (10) bis in Grundwasser führende Bodenschichten (12) getrieben sind, angeordnet sind.

3. Anordnung nach Anspruch 2, dadurch gekennzeichnet, daß die Schwingungserzeuger (43) in den Bohrungen (42) oberhalb des Grundwasserspiegels (13) angeordnet sind.

4. Anordnung zum Austreiben leichtflüchtiger Verunreinigungen aus dem Grundwasser und dem von ihm durchströmten Erdreich durch Erzeugung von Unterdruck in einem bis in den Bereich des verunreinigten Grundwassers getriebenen Brunnenschacht mit mindestens teilweise wasserdurchlässigen Schachtwandungen und durch Zuleitung von Frischluft unterhalb des Grundwasserspiegels in den Brunnenschacht, dadurch gekennzeichnet, daß im Brunnenschacht (10) mindestens ein Schwingungserzeuger oberhalb des Grundwasserspiegels angeordnet ist, der mechanische Schwingungen begrenzter Energie in die Umbebung des Brunnenschachtes abgibt, dergestalt, daß die Schwingungen in den Kapillaren der Bodenschichten (11a) molekulare Flüssigkeitsbewegungen auslösen, ohne dabei die Kapillaren zu zerstören.

5. Anordnung nach einem der Ansprüche 1 bis 4, dadurch gekennzeichnet, daß die Amplitude und die Frequenz der erzeugten Schwingungen regulierbar sind.

6. Anordnung nach einem der Ansprüche 1 bis 5, dadurch gekennzeichnet, daß die Betriebsdauer der Schwingungserzeuger (43) einstellbar ist.

## Claims

1. Arrangement for the expulsion of light volatile pollutants from groundwater and the soil it flows through, by producing a negative pressure in a wellshaft which is driven into the area of polluted groundwater having at least partially water-permeable shaft walls, and feeding fresh air underneath the groundwater level into the wellshaft. **characterised in that**, in the area**,** surrounding the wellshaft (10̸) at ground-layer level, is arranged at least one agitator (43) which produces oscillations of limited energy, so that the oscillations trigger molecular movements of liquid in the capillaries of the ground layers (11a) without destroying the capillaries.

2. Arrangement according to claim 1, **characterised in that** the agitators (43) are arranged in one or more bores (42) which have been driven in the area surrounding the wellshaft (10̸) down into groundwater-ducting soil layers.

3. Arrangement according to claim 2, **characterised in that** the agitators (43) are arranged in the bores (42) above groundwater level (13).

4. Arrangement for the expulsion of light volatile pollutants from groundwater and the soil it flows through, by producing a negative pressure in a wellshaft which is driven into the area of polluted groundwater having at least partially water-permeable shaft walls, and feeding fresh air underneath the groundwater level into the wellshaft, **characterised in that** in the wellshaft (10̸) above groundwater level is arranged at least one agitator which produces oscillation of limited energy in the area around the wellshaft, so that the oscillations trigger movements of liquids in the capillaries of the ground layers (11a) without destroying the capillaries.

5. Arrangement according to one of claims 1 to 4, **characterised in that** the amplitude and the frequency of the produced oscillations are regulated.

6. Arrangement according to one of claims 1 to 5, **characterised in that** the duration of operation of the agitators (43) is adjustable.

## Revendications

1. Dispositif pour chasser les souillures légèrement volatiles de la nappe souterraine et de la terre traversée par celle-ci par génération d'une dépression dans un puits entraîné jusque dans la zone de la nappe souterraine souillée avec des parois de puits au moins partiellement perméables à l'eau et par apport d'air frais au-dessous du niveau de la nappe souterraine dans le puits, caractérisé en ce que dans le voisinage du puits (10) au niveau de la couche du fond est disposé au moins un générateur de vibrations (43) qui délivre des vibrations mécaniques d'énergie limitée, de telle sorte que les vibrations dans les capillaires des couches du fond (11a) déclenchent des mouvements moléculaires de liquide, sans détruire les capillaires.

2. Dispositif selon la revendication 1, caractérisé en ce que les générateurs de vibrations (43) sont disposés dans un ou plusieurs perçages (42) qui sont entraînés dans le voisinage du puits (10) jusqu'à des couches de fond (12) conduisant dans la nappe souterraine.

3. Dispositif selon la revendication 2, caractérisé en ce que les générateurs de vibrations (43) sont disposés dans les perçages (42) au-dessus du niveau de la nappe souterraine (13).

4. Dispositif pour chasser les souillures légèrement volatiles de la nappe souterraine et de la terre traversée par celle-ci par génération d'une dépression dans un puits entraîné jusque dans la zone de la nappe souterraine souillée avec des parois de puits au moins partiellement perméables à l'eau et par apport d'air frais au-dessous du niveau de la nappe souterraine dans le puits, caractérisé en ce que dans le puits (10) est disposé au moins un générateur de vibrations au-dessus du niveau de la nappe souterraine, qui délivre dans le voisinage du puits des vibrations mécaniques d'énergie limitée, de telle sorte que les vibrations dans les capillaires des couches du fond (11a) déclenchent des mouvements moléculaires de liquide, sans détruire les capillaires.

5. Dispositif selon l'une des revendications 1 à 4, caractérisé en ce que l'amplitude et la fréquence des vibrations générées peuvent être modulées.

6. Dispositif selon l'une des revendications 1 à 5, caractérisé en ce que la durée de fonctionnement des générateurs de vibrations (43) peut être réglée.
